# EUROPEAN PATENT SPECIFICATION

(11) **EP 2 398 191 B1**
(45) Date of publication and mention of the grant of the patent: **29.03.2017**
(21) Application number: 09839989.2
(22) Date of filing: 10.02.2009
(51) Int. Cl.: H04L 12/44, H04Q 11/00

(54) **PARENT STATION DEVICE AND GRANT ALLOCATION METHOD**
HAUPTSTATIONSVORRICHTUNG UND ERTEILUNGSZUWEISUNGSVERFAHREN
DISPOSITIF DE STATION PARENT ET PROCÉDÉ D'ATTRIBUTION D'ACCORD

(43) Date of publication of application: 21.12.2011
(73) Proprietor: Mitsubishi Electric Corporation, Tokyo 100-8310 (JP)
(72) Inventor: MUKAI, Hiroaki, Tokyo 100-8310 (JP); HOTTA, Yoshifumi, Tokyo 100-8310 (JP); TANAKA, Masaki, Tokyo 100-8310 (JP)
(74) Representative: Pfenning, Meinig & Partner mbB
(86) International application number: PCT/JP2009/052227
(87) International publication number: WO 2010/092667

(56) References cited:
- WO-A1-2008/072347
- JP-A- 7 135 502
- HUSSAIN S ET AL: "EPON: An extensive review for up-to-date dynamic bandwidth allocation schemes", ELECTRICAL AND COMPUTER ENGINEERING, 2008. CCECE 2008. CANADIAN CONFERENCE ON, IEEE, PISCATAWAY, NJ, USA, 4 May 2008 (2008-05-04), pages 511-516, XP031286016, ISBN: 978-1-4244-1642-4
- ANSARI N ET AL: "Bandwidth allocation for multiservice access on EPONs", IEEE COMMUNICATIONS MAGAZINE, IEEE SERVICE CENTER, PISCATAWAY, US, vol. 43, no. 2, 1 February 2005 (2005-02-01), pages S16-S21, XP011126663, ISSN: 0163-6804

## Description

### TECHNICAL FIELD

The present invention relates to a master station unit of a PON system.

### BACKGROUND ART

In a point-to-multipoint communication system such as a PON (passive optical network) system, a master station unit (OLT: optical line terminal) updates the amount of grant at regular intervals corresponding to transmission enabling information, which is to be allocated to a slave station unit (ONU: optical network unit). For efficient use of a bandwidth, the OLT allocates a grant according to the traffic condition of the ONU. In the transmission of variable length data such as a frame of Ethernet (registered trademark) in the PON system, a grant allocated by the OLT and data transmitted from the ONU may not be delimited at the same point. This generates a time period not used for upward data transmission, resulting in a loss of a bandwidth. In this regard, Patent Literature 1 and Non-Patent Literature 1 cited below disclose the following technique. The OLT collects a queue length in an upward buffer on the basis of a report message from the ONU, and allocates a grant corresponding to the queue length.
The ONU notifies not only the volume of data accumulated in the upward buffer but also a delimiter in variable length data. The OLT allocates a grant corresponding to the queue length notified by the ONU, and the allocated grant is thoroughly used for data transmission to achieve bandwidth allocation without loss. Non-Patent Literature 2 discloses a bandwidth allocation method for multiservice access on EPONs addressing and providing an overview of the upstream allocation bandwidth issue for multiservice access provisioning over EPONs, and proposes and algorithm for dynamic bandwidth allocation with service differentiation. Based on the multipoint control protocol (MPCP) and bursty traffic prediction, the algorithm enhances QoS metrics such as average frame delay, average queue length, and frame loss probability over other existing protocols.

[Patent Literature 1] Japanese Patent Application Laid-Open No. 2008-193708
[Non-Patent Literature 1] "Dynamic Bandwidth Allocation Algorithm for GE-PON" by Osamu YOSHIHARA, Noriyuki OOTA, and Noriki MIKI, published in 2002 by the Institute of Electronics, Information and Communication Engineers
[Non-Patent Literature 2] "Bandwidth allocation for multiservice access on EPONs" by Yuanqiu Luo and Nirwan Ansari, published in 2005 by the IEEE COMMUNICATIONS MAGAZINE, IEEE SERVICE CENTER, PISCATAWAY, US

### DISCLOSURE OF INVENTION

### PROBLEM TO BE SOLVED BY THE INVENTION

The aforementioned conventional technique employs a way of causing the OLT to collect a queue length notified from the ONU and to allocate a grant for the next cycle.
In this technique, the ONU keeps track of a queue length, so that upward data should be accumulated in the buffer. Thus, a delay is generated in a grant allocation process that allows for a time of accumulation in the buffer even if the transmission speed of the PON system is increased, thereby imposing restriction on throughput.

The present invention has been made in view of the foregoing. It is an object of the invention to provide a master station unit capable of reducing a waiting time in upward transmission by a faster ONU.

### EFFECT OF THE INVENTION

In order to solve the above problem and in order to attain the above object, in a master station unit used in a PON system including a high-speed optical signal of a high transmission speed and a low-speed optical signal a speed of which is lower than that of the high-speed optical signal, in the master station used in the PON system employing TDMA system for upward signal transmission, and in the master station unit controlling transmission and reception of the high-speed optical signal and the low-speed optical signal and allocating a grant to a slave station unit connected to the master station unit, the master station unit of the present invention, includes: traffic monitoring means for measuring an amount of traffic of data received from a high-speed slave station unit that makes communications using the high-speed optical signal; and bandwidth allocating means for allocating a grant to a low-speed slave station unit on the basis of report information acquired from the low-speed slave station unit that makes communications using the low-speed optical signal. Additionally, the bandwidth allocating means allocates a grant to the high-speed slave station unit on the basis of a grant allocated in a previous cycle, and a result of measurement of the amount of traffic in the previous cycle acquired from the traffic monitoring means.

### EFFECTS OF THE INVENTION

The master station unit according to the present invention can reduce a waiting time in upward transmission by a faster ONU.

### BRIEF DESCRIPTION OF DRAWINGS

[FIG. 1] FIG. 1 shows an example of the configuration of a PON system.
[FIG. 2] FIG. 2 is a flow chart for explaining a bandwidth allocation process.
[FIG. 3] FIG. 3 is a timing chart of transmission of upward signals by respective ONUs.
[FIG. 4] FIG. 4 shows an example of the configuration of a PON system.
[FIG. 5] FIG. 5 is a flow chart for explaining a bandwidth allocation process.

### EXPLANATION OF LETTERS AND NUMERALS

- 1, 1a: optical transmitter and receiver
- 2: MAC-L part
- 3: MAC-H part
- 4, 4a: bandwidth allocating part
- 5, 5a: traffic monitoring part
- 6: MAC part
- 10,: 10a OLT
- 20: optical branch section
- 30, 31: low-speed ONU
- 40, 41: high-speed ONU
- 50, 51: ONU-a
- 60, 61: ONU-b

### BEST MODE(S) FOR CARRYING OUT THE INVENTION

An embodiment of a master station unit according to the present invention will be described in detail below on the basis of the drawings. This embodiment is not intended to limit the invention. In the description below, a bandwidth may also be called a grant.

### Embodiment

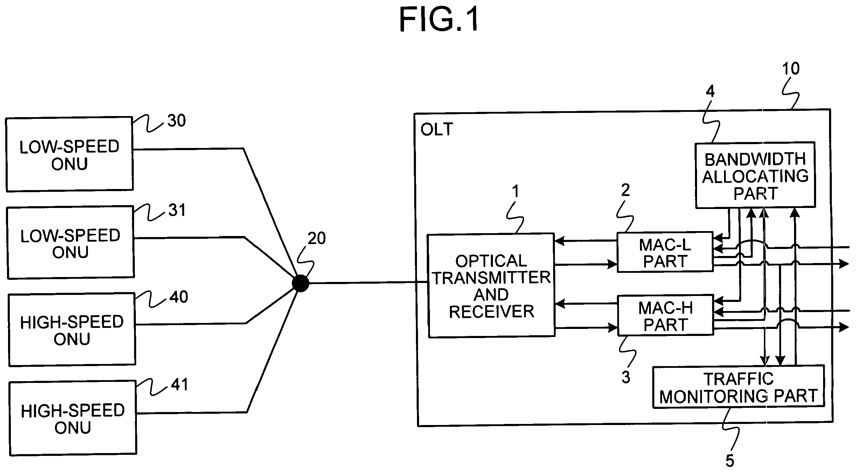

FIG. 1 shows an example of the configuration of a PON system with a master station unit (hereinafter called OLT) according to the embodiment and slave station units (hereinafter called ONUs). The PON system includes an OLT 10, an optical branch section 20, low-speed ONUs 30 and 31, and high-speed ONUs 40 and 41.

The OLT 10 is a unit of a station placed in a station housing of a communications carrier, and supports a plurality of transmission rates. Here, as an example, the OLT 10 supports two transmission rates (low-speed optical signal and high-speed optical signal). The OLT 10 includes an optical transmitter and receiver 1, a MAC-L part 2, a MAC-H part 3, a bandwidth allocating part 4, and a traffic monitoring part 5. The optical transmitter and receiver 1 transmits and receives a multi-rate optical signal. The optical transmitter and receiver 1 uses different wavebands for downward transmission of low-speed optical signal and high-speed optical signal, and uses the same waveband for upward transmission of the low-speed optical signal and the high-speed optical signal. The MAC-L part 2 has a function of a MAC layer termination for controlling a low-speed optical signal. The MAC-H part 3 has a function of a MAC layer termination for controlling a high-speed optical signal. The bandwidth allocating part 4 allocates a grant on the basis of queue length report information received from each ONU and incoming traffic. The traffic monitoring part 5 measures the volume of data the OLT 10 has received from each ONU.

The optical branch section 20 includes an optical fiber and a power splitter. The optical branch section 20 causes an optical signal from the OLT 10 to branch to each of the ONUs, and combines optical signals from the respective ONUs. The low-speed ONUs 30 and 31 are generally available ONUs for making communications using low-speed optical signals of a low transmission speed. The high-speed ONUs 40 and 41 are ONUs prepared for users of upgraded service, and make communications using high-speed optical signals of a high transmission speed. Each ONU is placed in a subscriber's residence.

For upward communications between the OLT 10 and each of the ONUs, the ONUs each use the same waveband. Accordingly, the bandwidth allocating part 4 of the OLT 10 manages grants to be allocated to the respective ONUs so that upward signals from the respective ONUs will not collide with each other. In order to start data transmission, each of the ONUs first transmits a report (queue length report information). Then, the optical transmitter and receiver 1 of the OLT 10 converts the upward optical signals from the respective ONUs to electric signals, and outputs the electric signals to the MAC-L part 2 and the MAC-H part 3. The MAC-L part 2 extracts queue length report information from the signals received from the low-speed ONUs 30 and 31, and transmits the extracted queue length report information to the bandwidth allocating part 4. The MAC-H part 3 extracts queue length report information from the signals received from the high-speed ONUs 40 and 41, and transmits the extracted queue length report information to the bandwidth allocating part 4.

The bandwidth allocating part 4 allocates grants to the respective ONUs on the basis of the queue length report information given from each ONU. The bandwidth allocating part 4 notifies information about the allocated grants to the MAC-L part 2 and the MAC-H part 3. The MAC-L part 2 and the MAC-H part 3 multiplex the grant information and corresponding downward signals, and output the resultant downward signals. The optical transmitter and receiver 1 converts the respective downward signals in the form of electric signals to optical signals. Then, the optical transmitter and receiver 1 transmits gates (grant information) to the low-speed ONUs 30 and 31 using low-speed optical signals, and to the high-speed ONUs 40 and 41 using high-speed optical signals at a wavelength different from that of the low-speed optical signals.

The ONUs having received the grant information each transmit data according to the allocated grants.
After the ONUs each transmit data, the optical transmitter and receiver 1 of the OLT 10 converts upward optical signals from the respective ONUs to electric signals, and outputs the electric signals to the MAC-L part 2 and the MAC-H part 3. The MAC-L part 2 outputs the data received from the low-speed ONUs 30 and 31 to outside (to the Internet, a server that provides contents and the like). If the received data contains queue length report information, the MAC-L part 2 extracts the queue length report information, and transmits the extracted queue length report information to the bandwidth allocating part 4. The MAC-H part 3 outputs the data received from the high-speed ONUs 40 and 41 to outside. If the received data contains queue length report information, the MAC-H part 3 extracts the queue length report information, and transmits the extracted queue length report information to the bandwidth allocating part 4. The traffic monitoring part 5 measures the volume of data the MAC-L part 2 and the MAC-H part 3 output to outside, and notifies the result of the measurement as incoming traffic to the bandwidth allocating part 4. The bandwidth allocating part 4 allocates grants for the next cycle on the basis of the queue length report information and the incoming traffic.

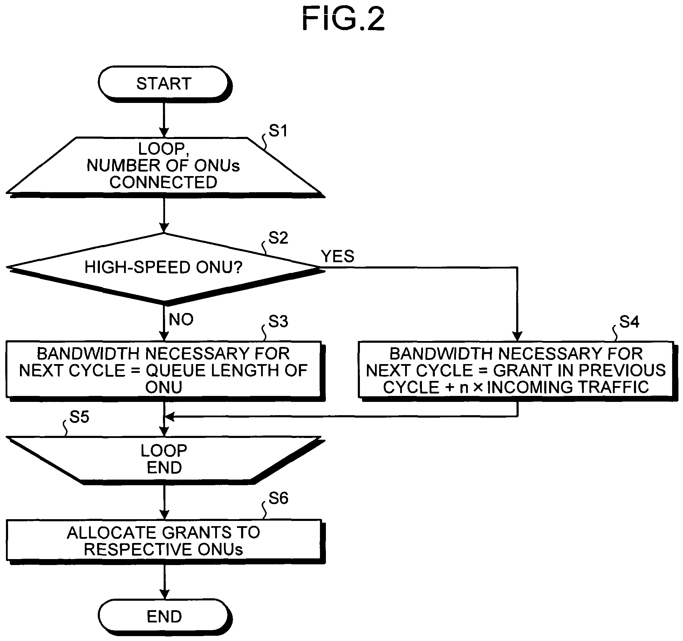

A bandwidth allocation process by the bandwidth allocating part 4 will be described in detail next. FIG. 2 is a flow chart for explaining the bandwidth allocation process by the bandwidth allocating part 4. The bandwidth allocating part 4 updates the amount of grant at regular intervals to be allocated to an ONU connected to the bandwidth allocating part 4. First, the bandwidth allocating part 4 selects one ONU connected to the bandwidth allocating part 4 (step S1), and determines if the selected ONU is a high-speed ONU (40, 41) that performs high-speed optical communications (step S2). This determination is made, for example, by using the rate of a signal the OLT 10 receives at the time of initial connection, and the determination is stored in a database. If the ONU is a low-speed ONU (30, 31) that performs low-speed optical communications (step S2: No), the bandwidth allocating part 4 makes a bandwidth necessary for the next cycle correspond to a queue length on the basis of queue length report information received from the MAC-L part 2 (step S3). The reason therefor is that, a bandwidth loss is generated if a grant length and a queue length (data length) do not have the same length. Accordingly, in order to prevent this, the bandwidth allocating part 4 receives a delimiter in variable length data notified from each ONU. If the ONU is a high-speed ONU (40, 41) that performs high-speed optical communications (step S2: Yes), the bandwidth allocating part 4 determines a bandwidth necessary for the next cycle on the basis of a grant allocated in the previous cycle and incoming traffic notified from the traffic monitoring part 5 (step S4). To be specific, the term of the incoming traffic is multiplied by a factor n, and n becomes zero if a bandwidth is the same as that in the previous cycle. The factor n can be changed where appropriate according to the amount of traffic, and additionally, according to whether importance should be placed on low delay or on efficiency of use of a bandwidth.

Increase of the transmission rate of the PON system does not change a distance between the OLT 10 and each ONU and the number of ONUs to be connected, meaning that there will be no change in a grant length. Meanwhile, for transmission of data of the same byte length, the high-speed ONUs 40 and 41 require a time relatively shorter than that required by the low-speed ONUs 30 and 31. Accordingly, a bandwidth loss generated by different boundaries of a grant length and data becomes relatively smaller in the case of the high-speed ONUs 40 and 41 than that in the case of the low-speed ONUs 30 and 31. This reduces the need for the OLT 10 to collect a delimiter in data on the basis of queue length report information given from the high-speed ONU (40, 41). In the transmission of voluminous data according to, for example, FTP (file transfer protocol), upward traffic is generated with a high probability in a next cycle if traffic of a certain amount is generated in a certain cycle. In this case, the OLT 10 does not wait for reception of queue length report information from the high-speed ONU (40, 41), but allocates a grant for a next cycle on the basis of a grant allocated in a previous cycle and incoming traffic.

Like a conventional ONU, the high-speed ONU (40, 41) generates a report after accumulating data once in a buffer in the high-speed ONU itself. Meanwhile, the OLT 10 allocates a grant without using queue length report information received from the high-speed ONU (40, 41).
This prevents a delay generated in a series of processes including transmission of a report by the high-speed ONU (40, 41), allocation of a grant and transmission of a gate by the OLT 10, and data transmission by the high-speed ONU (40, 41) on the basis of the gate. As a result, a waiting time in upward data transmission by the high-speed ONU (40, 41) can be reduced.

There is no grant allocated in a previous cycle when the high-speed ONU (40, 41) starts data transmission for the first time in step S4. In this case, the bandwidth allocating part 4 makes a bandwidth necessary for the next cycle correspond to a queue length on the basis of queue length report information received from the MAC-H part 3.

The bandwidth allocating part 4 repeats the aforementioned processes in steps S2 to S4 a number of times corresponding to the number of ONUs connected to the bandwidth allocating part 4 (step S5). After finishing the processes for all the ONUs connected, the bandwidth allocating part 4 actually allocates grants to the respective ONUs (step S6).

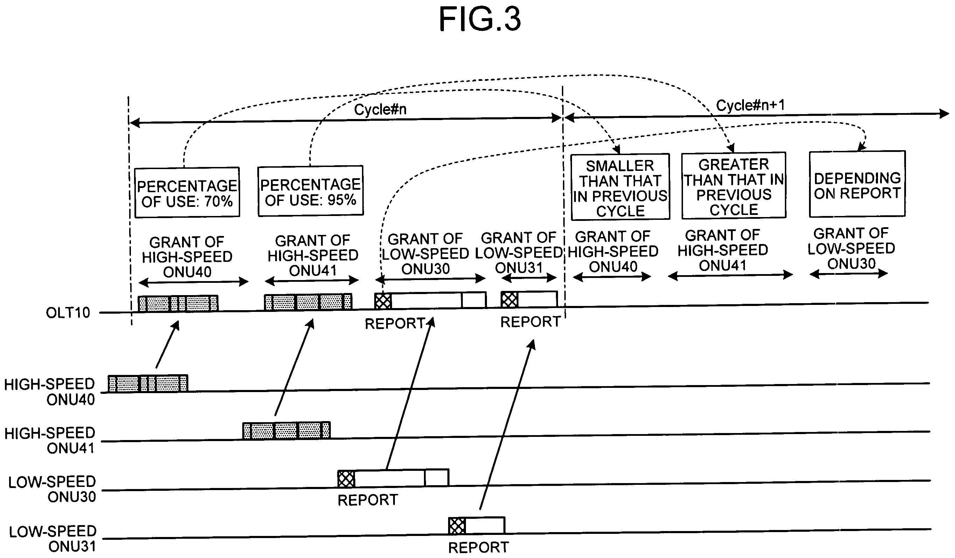

Described next is how the ONUs each transmit upward signals on the basis of the grants allocated to the ONUs as a result of the aforementioned processes. FIG. 3 is a timing chart of transmission of upward signals by the respective ONUs. In Cycle #n, the ONUs each transmit data on the basis of grants allocated to the ONUs. The bandwidth allocating part 4 allocates grants to the low-speed ONUs 30 and 31 for the next Cycle #n+1 on the basis of reports (queue length report information) contained in data. The bandwidth allocating part 4 allocates grants to the high-speed ONUs 40 and 41 for the next Cycle #n+1 on the basis of grants allocated in the Cycle #n and incoming traffic.

For example, the high-speed ONU 40 uses only 70% of the grant allocated in the Cycle #n. In this case, the bandwidth allocating part 4 reduces the amount of grant to be allocated in the next Cycle #n+1. More specifically, the bandwidth allocating part 4 makes n smaller than zero in step S4 of the flow chart shown in FIG. 2. Meanwhile, the high-speed ONU 41 uses 95% of the grant allocated in the Cycle #n. In this case, the bandwidth allocating part 4 increases the amount of grant to be allocated in the next Cycle #n+1. More specifically, the bandwidth allocating part 4 makes n greater than zero in step S4 of the flow chart shown in FIG. 2. The percentage of use is set at any value that is used as a basis to determine if the amount of allocation of a grant in a next cycle should be reduced or increased.

As described above, in the embodiment, the bandwidth allocating part 4 allocates grants for a next cycle to the high-speed ONUs 40 and 41 on the basis of grants allocated in a previous cycle and incoming traffic. This allows the high-speed ONUs 40 and 41 to prevent a delay generated in the processes between generation of queue length report information and reception of a gate, thereby reducing a waiting time in upward data transmission. Also, the OLT 10 can allocate grants with low delay to the high-speed ONUs 40 and 41, so that an end user can be given high throughput at an application level.

The application of the aforementioned technique may be expanded, for example, to a PON system with ONUs that notify queue length report information in different specifications.

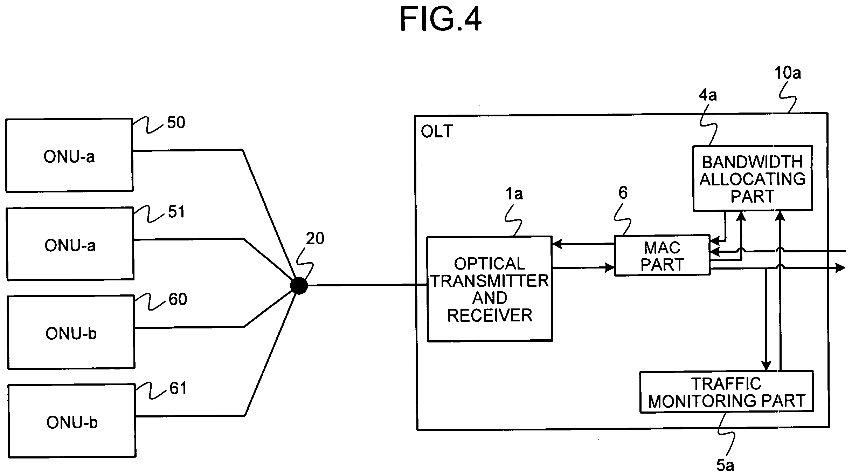

FIG. 4 shows an example of the configuration of a PON system with a master station unit and slave station units. The PON system includes an OLT 10a, an optical branch section 20, ONU-a's 50 and 51, and ONU-b's 60 and 61.

The OLT 10a is a unit of a station placed in a station housing of a communications carrier. The OLT 10a includes an optical transmitter and receiver 1a, a MAC part 6, a bandwidth allocating part 4a, and a traffic monitoring part 5a. The optical transmitter and receiver 1a transmits and receives an optical signal of a single communication speed. The MAC part 6 has a function of a MAC layer termination for controlling an optical signal. The bandwidth allocating part 4a allocates a grant on the basis of queue length report information received from each ONU and incoming traffic. The traffic monitoring part 5a measures the volume of data the OLT 10a has received from each ONU.

The ONU-a's 50 and 51 are ONUs that notify a delimiter in data in queue length report information. The ONU-b's 60 and 61 are ONUs that do not notify a delimiter in data but notify the occupation ratio of a buffer and the like in data in queue length report information.

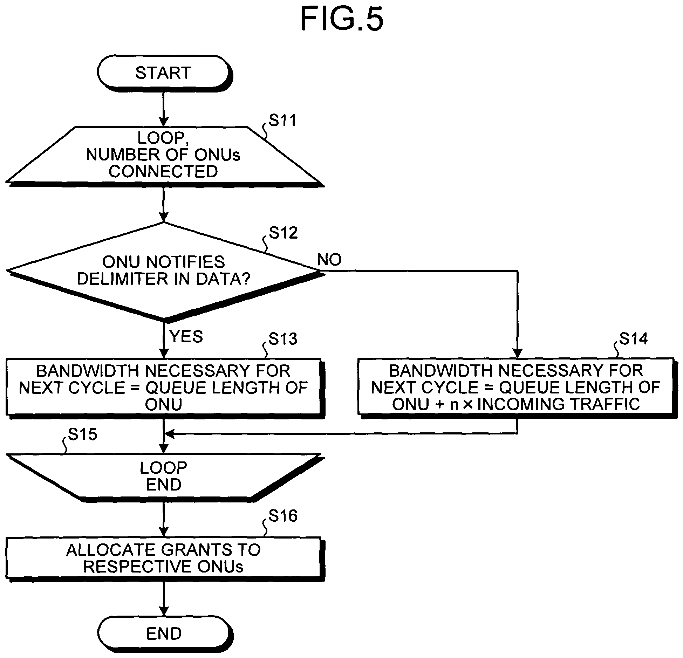

A bandwidth allocation process by the bandwidth allocating part 4a will be described in detail next. FIG. 5 is a flow chart for explaining the bandwidth allocation process by the bandwidth allocating part 4a. The bandwidth allocating part 4a updates the amount of grant at regular intervals to be allocated to an ONU connected to the bandwidth allocating part 4a. First, the bandwidth allocating part 4a selects one ONU connected to the bandwidth allocating part 4a (step S11), and determines if the selected ONU is an ONU (ONU-a 50, 51) that notifies a delimiter in data (step S12). This determination is made, for example, by reading the individual number of each ONU at the time of initial connection or information through a management interface after the connection, and the determination is stored in a database. If the ONU is an ONU (ONU-a 50, 51) that notifies a delimiter in data (step S12: Yes), the bandwidth allocating part 4a makes a bandwidth necessary for the next cycle correspond to a queue length on the basis of queue length report information received from the MAC part 6 (step S13). If the ONU is an ONU (ONU-b 60, 61) that does not notify a delimiter in data (step S12: No), the bandwidth allocating part 4a determines a bandwidth necessary for the next cycle on the basis of queue length report information received from the MAC part 6 and incoming traffic notified by the traffic monitoring part 5a (step S14). The reason therefor is that, as the ONU-b's 60 and 61 are ONUs that do not notify a delimiter in data in queue length report information, a margin should be allowed for in a queue length (data length) when a grant is allocated. Here, a bandwidth is determined by multiplying the incoming traffic by a factor n. The factor n can be changed where appropriate, for example, by referring to the amount of traffic in a different ONU and the like.

The bandwidth allocating part 4a repeats the aforementioned processes in steps S12 to S14 a number of times corresponding to the number of ONUs connected to the bandwidth allocating part 4a (step S15). After finishing the processes for all the ONUs connected, the bandwidth allocating part 4a actually allocates grants to the respective ONUs (step S16).

A grant to be allocated to an ONU that does not notify a delimiter in data in queue length report information may be increased according to incoming traffic.

### INDUSTRIAL APPLICABILITY

As described above, the master station unit according to the present invention is useful for a PON system, and in particular, suited to a PON system that covers different communication speeds.

## Claims

1. A master station unit (10, 10a) used in a PON system including a high-speed optical signal of a high transmission speed and a low-speed optical signal a speed of which is lower than that of the high-speed optical signal, the PON system employing TDMA system for upward signal transmission, the master station unit (10, 10a) adapted to control transmission and reception of the high-speed optical signal and the low-speed optical signal and to allocate a grant to a slave station unit (30, 31, 40, 41) connected to the master station unit (10, 10a), the master station unit (10, 10a) comprising:
**traffic monitoring means (5, 5a) adapted to measure an amount of traffic of data received from a high-speed slave station unit (30, 31, 40, 41) that makes communications using the high-speed optical signal; characterized by**
bandwidth allocating means (4, 4a) adapted to allocate a grant to a low-speed slave station unit (30, 31, 40, 41) on the basis of report information acquired from the low-speed slave station unit (30, 31, 40, 41), the low-speed slave station unit (30, 31, 40, 41) making communications using the low-speed optical signal, the bandwidth allocating means (4, 4a) adapted to allocate a grant to the high-speed slave station unit (30, 31, 40, 41) on the basis of a grant allocated in a previous cycle, and a result of measurement of the amount of traffic in the previous cycle acquired from the traffic monitoring means (5, 5a).

2. The master station unit (10, 10a) according to claim 1, wherein
the bandwidth allocating means (4, 4a) allocates a grant to the high-speed slave station unit (30, 31, 40, 41) on the basis of a queue length contained in the acquired report information when data transmission is started, and allocates a grant to the high-speed slave station unit (30, 31, 40, 41) for a next cycle on the basis of the grant allocated in the previous cycle and the amount of traffic in the previous cycle when the data transmission continues.

3. The master station unit (10, 10a) according to claim 2, wherein
the bandwidth allocating means (4, 4a) makes a grant to be allocated in the next cycle smaller than that allocated in the previous cycle if a ratio of the amount of traffic in the previous cycle to the grant allocated in the previous cycle is smaller than a threshold, and
the bandwidth allocating means (4, 4a) makes a grant to be allocated in the next cycle greater than that allocated in the previous cycle if the ratio of the amount of traffic in the previous cycle to the grant allocated in the previous cycle is greater than the threshold.

4. The master station unit (10, 10a) according to any one of claims 1 to 3, wherein
the bandwidth allocating means (4, 4a) allocates a grant to the low-speed slave station unit (30, 31, 40, 41), the grant corresponding to a queue length contained in the acquired report information.

5. The master station unit (10, 10a) according to any one of claims 1 to 3, wherein type information indicating whether a slave station unit (30, 31, 40, 41) is the low-speed slave station unit (30, 31, 40, 41) or the high-speed slave station unit (30, 31, 40, 41) is acquired at the time of initial connection, and when identifying information for identifying a slave station unit (30, 31, 40, 41) and the type information are stored in association with each other, it is determined whether a slave station unit (30, 31, 40, 41) that makes communications is the low-speed slave station unit (30, 31, 40, 41) or the high-speed slave station unit (30, 31, 40, 41) on the basis of the identifying information.

6. The master station unit (10, 10a) according to claim 4, wherein type information indicating whether a slave station unit (30, 31, 40, 41) is the low-speed slave station unit (30, 31, 40, 41) or the high-speed slave station unit (30, 31, 40, 41) is acquired at the time of initial connection, and when identifying information for identifying a slave station unit (30, 31, 40, 41) and the type information are stored in association with each other, it is determined whether a slave station unit (30, 31, 40, 41) that makes communications is the low-speed slave station unit (30, 31, 40, 41) or the high-speed slave station unit (30, 31, 40, 41) on the basis of the identifying information.

7. A method for allocating a grant in a PON system, the PON system including a high-speed optical signal of a high transmission speed and a low-speed optical signal a speed of which is lower than that of the high-speed optical signal, the PON system employing TDMA system for upward signal transmission, the method comprising:
a report transmitting step of causing a high-speed slave station unit (30, 31, 40, 41) that is a slave station unit (30, 31, 40, 41) that makes communications using the high-speed optical signal to transmit a report frame including report information to a master station unit (10, 10a) when data transmission is started;
an initial grant allocating step of causing the master station unit (10, 10a) to allocate a grant on the basis of the report information contained in the report frame received from the high-speed slave station unit (30, 31, 40, 41) ;
a gate transmitting step of causing the master station unit (10, 10a) to generate a gate frame including grant information on the basis of the allocated grant, and to output the gate frame to the high-speed slave station unit (30, 31, 40, 41) ;
a data transmitting step of causing the high-speed slave station unit (30, 31, 40, 41) to receive the gate frame, and to transmit data to the master station unit (10, 10a) on the basis of the grant information contained in the gate frame;
a traffic monitoring step of causing the master station unit (10, 10a) to measure an amount of traffic of the data received from the high-speed slave station unit (30, 31, 40, 41) ; **characterised by**
a subsequent grant allocating step of causing the master station unit (10, 10a) to allocate a grant for a next cycle to the low-speed slave station unit (30, 31, 40, 41) on the basis of report information acquired from the low-speed slave station unit (30, 31, 40, 41), and to allocate a grant for a next cycle to the high-speed slave station unit (30, 31, 40, 41) on the basis of a grant allocated to the high-speed slave station unit (30, 31, 40, 41) in a previous cycle and the measured amount of traffic.

## Patentansprüche

1. Hauptstationseinheit (10, 10a) genutzt in einem PON-System einschließend ein optisches Hochgeschwindigkeitssignal mit einer hohen Übertragungsgeschwindigkeit und ein optisches Niedriggeschwindigkeitssignal, dessen Geschwindigkeit geringer ist als die des optischen Hochgeschwindigkeitssignals, wobei das PON-System ein TDMA-System zur Aufwärts-Signalübertragung verwendet,
wobei die Hauptstationseinheit (10, 10a) angepasst ist,
Übertragung und Empfang von dem optischen Hochgeschwindigkeitssignal und dem optischen Niedriggeschwindigkeitssignal zu steuern und
eine Genehmigung an eine Unterstationseinheit (30, 31, 40, 41) zu allokieren, die mit der Hauptstationseinheit (10, 10a) verbunden ist,
wobei die Hauptstationseinheit (10, 10a) umfasst:
ein Verkehrsüberwachungsmittel (5, 5a), das angepasst ist, eine Verkehrsmenge von Daten zu messen, die von einer Hochgeschwindigkeits-Unterstationseinheit (30, 31, 40, 41) empfangen werden, die unter Nutzen des optischen Hochgeschwindigkeitssignals kommuniziert;
***gekennzeichnet durch***
ein Bandbreitenallokationsmittel (4, 4a), das angepasst ist, eine Genehmigung an eine Niedriggeschwindigkeits-Unterstationseinheit (30, 31, 40, 41) auf der Basis von Berichtsinformation zu allokieren, die von der Niedrlggeschwindigkeits-Unterstationseinheit (30, 31, 40, 41) erfasst wird, wobei die Niedriggeschwindigkeits-Unterstationseinheit (30, 31, 40, 41) unter Nutzen des optischen Niedriggeschwindigkeitssignals kommuniziert,
wobei das Bandbreitenallokationsmittel (4, 4a) angepasst ist, eine Genehmigung an die Hochgeschwindigkeits-Unterstationseinheit (30, 31, 40, 41) zu allokieren auf der Basis einer Genehmigung, die in einem vorhergehenden Zyklus allokiert wird, und eines Messergebnisses der Verkehrsmenge in dem vorhergehenden Zyklus, die von dem Verkehrsüberwachungsmittel (5, 5a) erfasst wird.

2. Hauptstationseinheit (10, 10a) nach Anspruch 1, bei welcher
das Bandbreitenallokationsmittel (4, 4a) eine Genehmigung an die Hochgeschwindigkeats-Slave-Stationseinheit (30, 31, 40, 41) auf der Basis einer Warteschlangenlänge allokiert, die in der erfassten Berichtsinformation enthalten ist, wenn eine Datenübertragung gestartet wird, und eine Genehmigung an die Hochgeschwindigkeits-Slave-Stationseinheit (30, 31, 40, 41) für einen nächsten Zyklus auf der Basis von der Genehmigung allokiert, die in dem vorhergehenden Zyklus allokiert wird, und der Verkehrsmenge in dem vorhergehenden Zyklus, wenn die Datenübertragung weitergeht.

3. Hauptstationseinheit (10, 10a) nach Anspruch 2, bei welcher
das Bandbreitenallokationsmittel (4, 4a) eine Genehmigung erteilt, die in dem nächsten Zyklus allokiert wird, die kleiner als die ist, die in dem vorhergehenden Zyklus allokiert wird, wenn ein Anteil der Verkehrsmenge in dem der Genehmigung vorhergehenden Zyklus, die in dem vorhergehenden Zyklus allokiert wird, kleiner als ein Schwellwert ist, und
das Bandbreitenallokationsmittel (4, 4a) eine Genehmigung erteilt, die in dem nächsten Zyklus allokiert wird, die größer als die ist, die in dem vorhergehenden Zyklus allokiert wird, wenn der Anteil der Verkehrsmenge in dem der Genehmigung vorhergehenden Zyklus, die in dem vorhergehenden Zyklus allokiert wird, größer als der Schwellwert ist,

4. Hauptstationseinheit (10, 10a) nach irgendeinem von Ansprüchen 1 bis 3, bei welcher
das Bandbreitenallokationsmittel (4, 4a) eine Genehmigung an die Niedriggeschwindigkeitsunterstationseinheit (30, 31, 40, 41) allokiert, wobei die Genehmigung einer Warteschlangenlänge entspricht, die in der erfassten Berichtsinformation enthalten ist.

5. Hauptstationseinheit (10, 10a) gemäß irgendeinem von Ansprüchen 1 bis 3, bei welcher Typinformation, die angibt, ob eine Unterstationseinheit (30, 31, 40, 41) die Niedriggeschwindigkeitsunterstationseinheit (30, 31, 40, 41) oder die Hochgeschwindigkeitsunterstationseinheit (30, 31, 40, 41) ist, zu der Zeit einer anfänglichen Verbindung erfasst wird, und wenn Identifikationsinformation zum Identifizieren einer Unterstationseinheit (30, 31, 40, 41) und die Typinformation in Verbindung miteinander gespeichert werden, auf der Basis der Identifikationsinformation festgestellt wird, ob eine kommunizierende Unterstationseinheit (30, 31, 40, 41) die Niedriggeschwindigkeitsunterstationseinheit (30,31, 40, 41) oder die Hochgeschwindigkeitsunterstationseinheit (30, 31, 40, 41) ist.

6. Hauptstationseinheit (10, 10a) nach Anspruch 4, bei welcher Typinformation, die angibt, ob eine Unterstationseinheit (30, 31, 40, 41) die Niedriggeschwindigkeitsunterstationseinheit (30, 31, 40, 41) oder die Hochgeschwindigkeitsunterstationseinheit (30, 31, 40, 41) ist, zu der Zeit einer anfänglichen Verbindung erfasst wird, und wenn Identifikationsinformation zum Identifizieren einer Unterstationseinheit (30, 31, 40, 41) und die Typinformation in Verbindung miteinander gespeichert werden, auf der Basis der Identifikationsinformation festgestellt wird, ob eine kommunizierende Unterstationseinheit (30, 31, 40, 41) die Niedriggeschwindigkeitsunterstationseinheit (30, 31, 40, 41) oder die Hochgeschwindigkeitsunterstationseinheit (30, 31,40, 41) ist.

7. Verfahren zum Allokieren einer Genehmigung in einem PON-System, wobei das PON-System ein optisches Hochgeschwindigkeitssignal mit einer hohen Übertragungsgeschwindigkeit und ein optisches Niedriggeschwindigkeitsslgnal einschließt, dessen Geschwindigkeit geringer als die des optischen Hochgeschwindigkeitssignals ist, wobei das PON-System ein TDMA-System zur Aufwärts-Signalübertragung verwendet, und das Verfahren umfasst:
einen Berichtsübertragungsschritt zum Veranlassen einer Hochgeschwindigkeitsunterstationseinheit (30, 31, 40, 41), die eine Unterstationseinheit (30, 31, 40, 41) ist, die unter Nutzen des optischen Hochgeschwindigkeitssignals kommuniziert, einen Berichtsrahmen, der Berichtsinformation einschließt, an eine Hauptstationseinheit (10, 10a) zu übertragen, wenn eine Datenübertragung gestartet wird;
einen anfänglichen Genehmigungsallokationsschritt zum Veranlassen der Hauptstationseinheit (10, 10a), eine Genehmigung auf der Basis der Berichtsinformation zu allokieren, die in dem Berichtsrahmen enthalten ist, der von der Hochgeschwindigkeitsunterstationseinheit (30, 31, 40, 41) empfangen wird;
einen Gate-Übertragungsschritt veranlassend die Hauptstationseinheit (10, 10a) einen Gate-Rahmen enthaltend Genehmigungsinformation zu erzeugen auf der Basis der allokierten Genehmigung und den Gate-Rahmen an die Hochgeschwindigkeitsunterstationseinheit (30, 31, 40, 41) auszugeben;
einen Datenübertragungsschritt zum Veranlassen der Hochgeschwindigkeitsunterstationseinheit (30, 31, 40, 41), den Gate-Rahmen zu empfangen, und Daten an die Hauptstationseinheit (10, 10a) zu übertragen auf der Basis der Genehmigungsinformation, die in dem Gate-Rahmen enthalten ist;
einen Verkehrsüberwachungsschritt zum Veranlassen der Hauptstationseinheit (10, 10a), eine Verkehrsmenge der Daten zu messen, die von der Hochgeschwindigkeitsunterstationseinheit (30, 31, 40, 41) empfangen werden; **gekennzeichnet durch**
einen nachfolgenden Genehmigungsallokationsschritt zum Veranlassen der Hauptstationseinheit (10, 10a), eine Genehmigung für einen nächsten Zyklus an die Niedriggeschwindigkeitsunterstationseinheit (30,31, 40, 41) zu allokieren auf der Basis von Berichtsinformation, die von der Niedriggeschwindigkeitsunterstationseinheit (30,31, 40, 41) erfasst wird, und eine Genehmigung für einen nächsten Zyklus an die Hochgeschwindigkeitsunterstationseinheit (30, 31, 40, 41) zu allokieren auf der Basis einer Genehmigung, die an die Hochgeschwindigkeitsunterstationseinheit (30, 31, 40, 41) in einem vorhergehenden Zyklus allokiert wird, und der gemessenen Verkehrsmenge.

## Revendications

1. Unité de station maître (10, 10a) utilisée dans un système de réseau PON incluant un signal optique haut débit d'une vitesse de transmission élevée, et un signal optique bas débit dont une vitesse est inférieure à celle du signal optique haut débit, le système de réseau PON employant un système d'accès TDMA en vue d'une transmission de signal vers l'amont, l'unité de station maître (10, 10a) étant apte à commander la transmission et la réception du signal optique haut débit et du signal optique bas débit et à affecter un octroi à une unité de station esclave (30, 31, 40, 41) connectée à l'unité de station maître (10, 10a), l'unité de station maître (10, 10a) comprenant :
un moyen de surveillance du trafic (5, 5a) apte à mesurer une quantité de trafic de données reçues en provenance d'une unité de station esclave haut débit (30, 31, 40, 41) qui met en oeuvre des communications en utilisant le signal optique haut débit ; **caractérisée par**
un moyen d'affectation de bande passante (4, 4a) apte à affecter un octroi à une unité de station esclave bas débit (30, 31, 40, 41) sur la base d'informations de rapport acquises auprès de l'unité de station esclave bas débit (30, 31, 40, 41), l'unité de station esclave bas débit (30, 31, 40, 41) mettant en oeuvre des communications en utilisant le signal optique bas débit, le moyen d'affectation de bande passante (4, 4a) étant apte à affecter un octroi à l'unité de station esclave haut débit (30, 31, 40, 41) sur la base d'un octroi affecté dans un cycle précédent, et d'un résultat de mesure de la quantité de trafic dans le cycle précédent, acquis auprès du moyen de surveillance du trafic (5, 5a).

2. Unité de station maître (10, 10a) selon la revendication 1, dans laquelle
le moyen d'affectation de bande passante (4, 4a) affecte un octroi à l'unité de station esclave haut débit (30, 31, 40, 41) sur la base d'une longueur de file d'attente contenue dans les informations de rapport acquises lorsque la transmission de données est initiée, et il affecte un octroi à l'unité de station esclave haut débit (30, 31, 40, 41) pour un cycle successif sur la base de l'octroi affecté dans le cycle précédent et de la quantité de trafic dans le cycle précédent lorsque la transmission de données se poursuit.

3. Unité de station maître (10, 10a) selon la revendication 2, dans laquelle
le moyen d'affectation de bande passante (4, 4a) réalise un octroi à affecter dans le cycle successif plus petit que l'octroi affecté dans le cycle précédent si un rapport de la quantité de trafic dans le cycle précédent à l'octroi affecté dans le cycle précédent est inférieur à un seuil ; et
le moyen d'affectation de bande passante (4, 4a) réalise un octroi à affecter dans le cycle successif plus grand que l'octroi affecté dans le cycle précédent, si le rapport de la quantité de trafic dans le cycle précédent à l'octroi affecté dans le cycle précédent est supérieur au seuil.

4. Unité de station maître (10, 10a) selon l'une quelconque des revendications 1 à 3, dans laquelle
le moyen d'affectation de bande passante (4, 4a) affecte un octroi à l'unité de station esclave bas débit (30, 31, 40, 41), l'octroi correspondant à une longueur de file d'attente contenue dans les informations de rapport acquises.

5. Unité de station maître (10, 10a) selon l'une quelconque des revendications 1 à 3, dans laquelle des informations de type, indiquant si une unité de station esclave (30, 31, 40, 41) est l'unité de station esclave bas débit (30, 31, 40, 41) ou l'unité de station esclave haut débit (30, 31, 40, 41), sont acquises à l'instant de connexion initiale, et lorsque des informations d'identification destinées à identifier une unité de station esclave (30, 31, 40, 41) et les informations de type sont stockées en association les unes avec les autres, il est déterminé si une unité de station esclave (30, 31, 40, 41) qui met en oeuvre des communications est l'unité de station esclave bas débit (30, 31, 40, 41) ou l'unité de station esclave haut débit (30, 31, 40, 41), sur la base des informations d'identification.

6. Unité de station maître (10, 10a) selon la revendication 4, dans laquelle des informations de type, indiquant si une unité de station esclave (30, 31, 40, 41) est l'unité de station esclave bas débit (30, 31, 40, 41) ou l'unité de station esclave haut débit (30, 31, 40, 41), sont acquises à l'instant de connexion initiale, et lorsque des informations d'identification destinées à identifier une unité de station esclave (30, 31, 40, 41) et les informations de type sont stockées en association les unes avec les autres, il est déterminé si une unité de station esclave (30, 31, 40, 41) qui réalise des communications est l'unité de station esclave bas débit (30, 31, 40, 41) ou l'unité de station esclave haut débit (30, 31, 40, 41), sur la base des informations d'identification.

7. Procédé d'affectation d'un octroi dans un système de réseau PON, le système de réseau PON incluant un signal optique haut débit d'une vitesse de transmission élevée, et un signal optique bas débit dont une vitesse est inférieure à celle du signal optique haut débit, le système de réseau PON employant un système d'accès TDMA en vue d'une transmission de signal vers l'amont, le procédé comprenant :
une étape de transmission de rapport consistant à amener une unité de station esclave haut débit (30, 31, 40, 41), qui est une unité de station esclave (30, 31, 40, 41) qui réalise des communications en utilisant le signal optique haut débit, à transmettre une trame de rapport incluant des informations de rapport, à une unité de station maître (10, 10a), lorsqu'une transmission de données est initiée ;
une étape d'affection d'octroi initial consistant à amener l'unité de station maître (10, 10a) à affecter un octroi sur la base des informations de rapport contenues dans la trame de rapport reçue en provenance de l'unité de station esclave haut débit (30, 31, 40, 41) ;
une étape de transmission de porte consistant à amener l'unité de station maître (10, 10a) à générer une trame de porte incluant des informations d'octroi sur la base de l'octroi affecté, et à délivrer en sortie la trame de porte à l'unité de station esclave haut débit (30, 31, 40, 41) ;
une étape de transmission de données consistant à amener l'unité de station esclave haut débit (30, 31, 40, 41) à recevoir la trame de porte, et à transmettre des données à l'unité de station maître (10, 10a), sur la base des informations d'octroi contenues dans la trame de porte ;
une étape de surveillance de trafic consistant à amener l'unité de station maître (10, 10a) à mesurer une quantité de trafic de données reçues en provenance de l'unité de station esclave haut débit (30, 31, 40, 41) ; **caractérisé par**
une étape d'affectation d'octroi subséquent consistant à amener l'unité de station maître (10,10a) à affecter un octroi, pour un cycle successif, à l'unité de station esclave bas débit (30, 31, 40, 41), sur la base d'informations de rapport acquises auprès de l'unité de station esclave bas débit (30, 31, 40, 41), et à affecter un octroi, pour un cycle successif, à l'unité de station esclave haut débit (30, 31, 40, 41), sur la base d'un octroi affecté à l'unité de station esclave haut débit (30, 31, 40, 41) dans un cycle précédent et de la quantité de trafic mesurée.
